# EUROPÄISCHE PATENTSCHRIFT

(11) **EP 4 255 702 B1**
(45) Veröffentlichungstag und Bekanntmachung des Hinweises auf die Patenterteilung: **09.09.2026**
(21) Anmeldenummer: 21824313.7
(22) Anmeldetag: 30.11.2021
(51) Int. Cl.: B28C 5/08, B01F 33/82, B28C 5/12, B28C 5/16, B28C 5/48, B28C 7/02, B28C 7/16, B28C 9/00, C04B 40/00, B01F 31/85, C04B 28/02

(54) **VORRICHTUNG UND VERFAHREN ZUR HERSTELLUNG EINES BETONS, INSBESONDERE EINES BETONS MIT HOHER FRÜHFESTIGKEIT**
DEVICE AND METHOD FOR PRODUCING CONCRETE, IN PARTICULAR HIGH EARLY STRENGTH CONCRETE
DISPOSITIF ET PROCÉDÉ DE PRODUCTION DE BÉTON, EN PARTICULIER DE BÉTON À HAUTE RÉSISTANCE INITIALE

(30) Priorität: 02.12.2020 DE 102020132015; 09.04.2021 DE 102021108917
(43) Veröffentlichungstag der Anmeldung: 11.10.2023
(73) Patentinhaber: Sonocrete GmbH, 03048 Cottbus (DE)
(72) Erfinder: REMUS, Ricardo, 03050 Cottbus (DE); SCHÖTZIGK, Paul, 15913 Alt Zauche (DE); JENTZSCH, Max, 03044 Cottbus (DE)
(74) Vertreter: Fuchs Patentanwälte Partnerschaft mbB
(86) Internationale Anmeldenummer: PCT/EP2021/083591
(87) Internationale Veröffentlichungsnummer: WO 2022/117571

(56) Entgegenhaltungen:
- RU-C1- 2 496 748
- US-A1- 2018 318 778

## Beschreibung

Die vorliegende Erfindung betrifft eine Vorrichtung zur Herstellung eines Betons, insbesondere eines Betons mit hoher Frühfestigkeit, sowie eines Verfahrens zur Produktion eines entsprechenden Betons.

Eine wichtige Kenngröße einer Betonzusammensetzung ist dessen Frühfestigkeit. Möglichkeiten zur Erhöhung der Frühfestigkeit von Beton sind etablierte Verfahren wie die Wärmebehandlung, der Einsatz von beschleunigenden Betonzusatzmitteln oder betontechnologische Maßnahmen wie eine Erhöhung des Zementgehaltes über das konstruktiv notwendige Maß hinaus oder eine Absenkung des w/z-Wertes (dem Verhältnis von Wasser zu Zement). Diese Varianten sind allerdings oftmals ein Kompromiss in welchem der Faktor Zeit durch deutlich erhöhte Herstellungskosten erkauft wird. Zudem kann es aufgrund der geänderten Zusammensetzung zwar zur Verbesserung der Frühfestigkeit auch zu einer unerwünschten Änderung der Materialeigenschaften insgesamt kommen (z.B. Schwindrisse).

Aus der DE 37 16 438 A1 ist eine Vorrichtung mit einem Zementvormischer einem Betonmischer und einem dazwischen angeordneten Tank bekannt. Dabei wird Zement und Wasser zu einem Zementleim angemischt. Dieser wird zwischengelagert und anschließend zur Betonherstellung, wie üblich, mit einer Gesteinskörnung vermengt.

Beim Anmischen vom Zementleim ergibt sich die Hürde, dass nur bei (sehr) hohen w/z-Werten genügend freies Wasser zur Verfügung steht, um Zement und Wasser zielsicher anzumischen. Da häufig ein großer Teil des Wassers mit der Gesteinsfeuchte in den Betonmischer kommt, reduziert sich der für die Vormischung zur Verfügung stehende Anteil an Wasser. Bei moderaten bis niedrigen w/z-Werten (< 0,50) kann dann ein Zementleim nur noch unter Einsatz von Hochleistungsverflüssigern hergestellt werden.

Weiterhin sind für das vollständige Aufschließen von Zement und Wasser hohe Mischgeschwindigkeiten notwendig. Dies wird in der E01 DE 37 16 438 A1 durch den Unteranspruch 3 und 4 berücksichtigt. Diese hochtourigen Mischwerkzeuge verschleißen durch die stark abrasive Wirkung des Zementes schnell und sind sehr anfällig für Verstopfungen (gerade bei geringen Wassergehalten).

Die größte Herausforderung in diesem Verfahren ergibt sich aus dem Bereitstellen einer gleichmäßigen Suspensionsqualität über den gesamten Produktionstag. Die vorgenannte Druckschrift liefert hier keine Antworten. Hier muss man allerdings davon ausgehen, dass die Suspension in einem Tank ("Lagersilo") gelagert wird. Dieser wird zum Betonmischen entleert und wieder neu befüllt, wobei dann wieder die Vorlagerungszeit abgewartet werden muss. Ein ökonomischer Betrieb der Mischanlage ist somit nicht möglich. Wird nun ein großer Tank befüllt und nach und nach entleert, wird die darin enthaltene Suspension mit der Zeit älter, wodurch sich die resultierenden Betoneigenschaften erheblich ändern. Letztendlich würde die Zementsuspension im Tank erstarren und jede Weiterverarbeitung unmöglich machen.

Weiterhin sind zweistufige Mischverfahren bekannt, mit welchen die Frühfestigkeit verbessert werden. Anwendung von zweistufigen Mischverfahren sind u.a. in der DE15 84 305 A oder DE 10 2016 003 644 B4 beschrieben. Hierbei soll die Verarbeitbarkeit und Frühfestigkeit von Betonen mit Hilfe eines zweistufigen Mischprozesses, durch 1.) intensives Vormischen der Bindemittelkomponenten mit und ohne Sand und 2.) durch abschließendes Mischen im Betonmischer verbessert werden.

Weiterhin bekannt ist das Vormischen auch unter Einsatz von Ultraschall, wie es bereits in der DE102007027080A1 und insbesondere in der DE 102019120939 A1 näher beschrieben wird.

Dabei haben alle zweistufigen Betonmischverfahren die Hürde, dass die Herstellung der Suspension die Bereitstellung einer gewissen Menge (Anmach-)Wasser erfordert. Der Wassergehalt eines Betons hängt von dem Wasseranspruch der Gesteinskörnung (Gk), dem w/z-Wert und dem Zementgehalt ab. Da die zugegebene Gesteinskörnung und insbesondere der Sand allerdings nie vollkommen trocken vorliegen (z.B. wird die Gesteinskörnung während der Befüllung von unterirdischen Lagern beregnet, um die Staubentwicklung gering zu halten), muss die an der Gesteinskörnung anhaftende Feuchtigkeit vom Anmachwasser abgezogen werden. Dies erfolgt über eine Feuchtemessung entweder beim Wäge- oder Transportvorgang oder im Betonmischer. Liegt nun eine mäßige bis hohe Feuchte der Gesteinskörnung vor (ca. 3 - 8 M.-%), muss diese Feuchtigkeit entsprechend vom Anmachwasser abgezogen werden. Folgendes Rechenbeispiel eines Fertigteil-Betons mit einem w/z-Wert von 0,46 einer laufenden Produktion eines Betonfertigteilwerks zur Veranschaulichung:

**Tabelle 1: Betonrezeptur w/z-Wert 0,46**

| Betonkomponente | Anteil [kg/m³] | Feuchte [M.-%] |
|---|---|---|
| Zement | 350 | trocken |
| Wasser | 161 | |
| Sand 0 - 2 mm | 698 | 6 |
| Kies 2 - 8 mm | 276 | 1,5 |
| Kies, 8 - 16 mm | 864 | 1,0 |
| Betonzusatzmittel (Fließmittel) | 2,45 | vernachlässigbar |
| | | |
| Anmachwasser nach Abzug der Gk-Feuchte | 106 | |

Das zur Herstellung der Suspension zur Verfügung stehende Wasser beträgt nach Abzug der Feuchtigkeit der Gesteinskörnung 106 kg/m³, also rund 2/3 der Ausgangsmenge. Für die Herstellung der Suspension muss nun ein w/z-Wert von 0,30 gewählt werden. Um derart niedrige w/z-Werte zielsicher anzumischen sind höhere Fließmitteldosierungen notwendig, die das Betonausbreitmaß ggf. über ein notwendiges Maß hinaus steigern und zusätzlich die Erhärtungsreaktion des Zementes verzögern.

Beispiel 2 zur Veranschaulichung: Wird nun im Produktionsprozess von z.B. Spannbetonelementen ein w/z-Wert von 0,35 angesetzt, ergibt sich folgende Rechnung:

**Tabelle 2: Betonrezeptur w/z-Wert 0,35**

| Betonkomponente | Anteil [kg/m³] | Feuchte [M.-%] |
|---|---|---|
| Zement | 350 | trocken |
| Wasser | 122 | |
| Sand 0 - 2 mm | 698 | 6 |
| Kies 2 - 8 mm | 276 | 1,5 |
| Kies, 8 - 16 mm | 864 | 1,0 |
| Betonzusatzmittel | 4,2 | vernachlässigbar |
| | | |
| Anmachwasser nach Abzug der Gk-Feuchte | 67 | |

Das, für die Herstellung einer Suspension im Vormischprozess, zur Verfügung stehende Wasser beträgt nun noch 67 kg/m³, wobei sich somit ein w/z-Wert der Suspension von 0,19 ergibt, der auf Grundlage der aktuell zur Verfügung stehenden Technologien nichtmehr zielsicher vorgemischt und dosiert werden kann. Bekannte Verfahren versuchen diese Problematik zu lösen in dem z.B. der feine Anteil der Gesteinskörnung, der den höchsten Feuchtegehalt aufweist (i. d. R. Sand), mit im Vormischer vorbehandelt wird (DE15 84 305 A oder DE10 2016 003 644 B4). Dies ist allerdings naheliegend, da somit mehr Wasser für den Suspensionsmischprozess zur Verfügung steht. Allerdings muss bei diesem Verfahren mit einem erhöhten Abrieb der Rührwerksorgane durch den abrasiven Sand und mit dem bekannten Problem des "Overmixing" gerechnet werden. Beim Overmixing werden kleine Teile der Sandpartikel durch schnell drehende Rührwerkzeuge abgeschlagen, also der Sand zerkleinert, wodurch sich der Wasseranspruch erhöht und die Verarbeitbarkeit verschlechtert.

Somit lässt sich die Problemstellung für die Anwendung von zweistufigen Mischverfahren wie folgt zusammenfassen: Niedrige w/z-Werte gewährleisten hohe Frühdruckfestigkeiten, kurze Mischzeiten gewährleisten einen schnellen Betonierprozess, insbesondere bei großen Bauteilen, die in mehreren Schritten befüllt werden. Die teilweise hohe Eigenfeuchte reduziert das für den Suspensionsmischprozess zur Verfügung stehende Wasser.

Im Extremfall, z.B. bei feuchter Witterung, steht nicht genügend Wasser für den Suspensionsmischprozess zur Verfügung. Aktuell kann dies nur durch eine Steigerung der Fließmittelkonzentration kompensiert werden, was die Fließfähigkeit des Betons ggf. über ein notwendiges Maß hinaus steigert, die Erhärtung verzögert und die Kosten des Betons erhöht.

RU 2 496 748 C1 offenbart ein Verfahren und eine Vorrichtung zur Herstellung von Betonmischungen, bei denen Wasser und weitere Beton-Bestandteile mit Ultraschall aktiviert/behandelt werden, wobei das Verfahren die folgenden Schritte umfasst: Herstellen einer Zementsuspension in einem Zementvormischer unter Einsatz von Ultraschall; und Überführen der Zementsuspension nach einem vorbestimmten Aufenthaltszeitraum in einen Betonmischer.

Ausgehend von dieser Vorbetrachtung ist es die Aufgabe der vorliegenden Erfindung unter Vermeidung der vorgenannten Problemstellung eine Vorrichtung und ein Verfahren zur Herstellung von Beton mit hohen Frühfestigkeiten bereitzustellen.

Die vorliegende Erfindung löst diese Aufgabe durch ein Verfahren zur Herstellung eines Betons mit den Merkmalen des Anspruchs 1 und mit einer Vorrichtung mit den Merkmalen des Anspruchs 6.

Die erfindungsgemäße Vorrichtung weist zumindest einen ersten Kristallisationstank auf, welcher eine Kristallisation einzelner im Zement enthaltener Bestandteile vor deren Zugabe zum Beton ermöglicht. Mehrere Kristallisationstanks können im Rahmen der vorliegenden Erfindung eine Kristallisationstankanordnung bilden. Dabei sind die Kristallisationstanks vorzugsweise in der Kristallisationstankanordnung übereinander angeordnet, so dass die Zementsuspension schwerkraftbedingt von einem oberen in einen darunter angeordneten Kristallisationstank überführbar ist.

Dieser Vorrichtung liegt die Erkenntnis zu Grunde, dass für eine reaktionsaktivierende Vormischung von Zement und Wasser, insbesondere unter Einsatz von Ultraschall, ein günstiges Wasser-zu-Zement Verhältnis (w/z-Wert) existiert. Dieser w/z-Wert ist abhängig von der Zementart und liegt vorzugsweise im Bereich von 0,50 - 2,0. Niedrigere w/z-Werte führen durch den höheren Feststoffgehalt zu stärkeren Partikelinteraktionen die eine starke Erwärmung der Suspension begünstigt und die sich unter Umständen negativ auswirken kann.

Durch Vorbehandlung der Zementsuspension mit Ultraschall, entstehen metastabile Kristallisationskeime, die durch die Lagerung im Kristallisationstank zusätzliche Zeit zum Wachstum bekommen und (später) als stabile Kristallkeime im Betonmischer dosiert werden.

Dieser Kristallisationstank umfasst ein Rührwerk mit einem Rührer, welcher die Zementsuspension mit langsamer Geschwindigkeit während der Kristallisationsperiode in Bewegung hält.

Eine bevorzugte Rührgeschwindigkeit beträgt dabei weniger als 50 U/min, vorzugsweise 2-25 U/min, besonders bevorzugt 5-20 U/min.

Durch die beginnende Kristallisation der Zementbestandteile wird für den anschließend daraus hergestellten Beton eine wesentlich höhere Frühfestigkeit des Betons erreicht als ohne den Kristallisationstank.

Dabei muss auch nicht der gesamte im Beton verwendete Zement dieser Art der Vorbehandlung unterzogen werden, sondern es genügt die Aktivierung einer Teilmenge, welche die Kristallisation des übrigen direkt in den Betonmischer gegebenen Zements zusätzlich fördern. Entsprechend kann die Dimensionierung und der Energiehaushalt zum Betrieb des Zementvormischers und des Kristallisationstanks vorteilhaft optimiert werden.

Der Zementvormischer weist erfindungsgemäß zur Bereitstellung einer Zementsuspension zumindest einen Ultraschallerzeuger, insbesondere eine Ultraschallsonde, auf.

Anders als in der DE 37 16 438 A1 wird in der vorliegenden Erfindung der Aufschluss nicht durch hochtourigen Mischwerkzeuge erzeugt, sondern durch den Einsatz von Ultraschall.

Zugleich wird dadurch, dass nur ein geringer Teil des Zementes (z.B. 20%) mit hohem Wassergehalt (w/z >> 1,0) vorgemischt wird, der Ultraschall zugleich weniger gedämpft und durch den geringen Anteil an Suspension im Verhältnis zum gesamten Beton, der Beton weniger stark erwärmt wird.

Höhere Wassergehalte begünstigen außerdem die Dosierung und die Reinigung der Anlage, insbesondere auch im Anschluss an ein Verfahren zur Ausführung der Anlage und ein daran anschließenden Reinigungsverfahren.

Weitere vorteilhafte Ausgestaltungen der erfindungsgemäßen Vorrichtung sind Gegenstand der Unteransprüche.

Ein idealer ultraschallgestützter Zementvormischer ist aus der DE 102019120939 A1 bekannt.

Durch einen solchen Zementvormischer gelingt nicht nur eine reine Vermischung von Zement und Wasser, sondern auch eine Aktivierung der Zementbestandteile und der Zementsuspension, so dass auch die Kristallisation gefördert wird. Dabei weist der Zementvormischer ebenfalls einen Rührer auf, welcher die Zementsuspension vorzugsweise mit höherer Rührgeschwindigkeit bewegt als der Rührer im ersten Kristallisationstank.

Durch das Vormischen in den vorgenannten Parametern und/oder die Rührgeschwindigkeit kommt es typischerweise zur Bildung von Luftblasen innerhalb der Zementsuspension, welche die Endfestigkeit des Betons negativ beeinflussen können. Diese Luftblasen werden während des Aufenthalts der Zementsuspension im Kristallisationstank ausgetrieben. Daher ist die Kombination des Kristallisationstank speziell mit einem Ultraschall-Zementvormischer besonders bevorzugt.

Ein weiterer bevorzugter Aspekt der Verwendung eines Kristallisationstanks ist das ein Ultraschall-Zementvormischer bauartbedingt nur eine geringe Menge an Zementsuspension innerhalb eines Zeitintervalls zur Verfügung stellen kann, da der Ultraschall bei einer größeren Menge Zementsuspension nur eine begrenzte Eindringtiefe aufweist. Hier kann der Kristallisationstank zugleich zur Bevorratung der Zementsuspension dienen.

Bevorzugt für einen energiearmen und störungsfreien Betrieb, ist der Zementvormischer, Kristallisationstank und Betonmischer derart zum Erdschwerefeld angeordnet, dass die Zementsuspension schwerkraftbedingt vom Zementvormischer, in den Kristallisationstank und von dort in den Betonmischer fließen kann. Wo dies nicht möglich ist, kann eine Pumpe zum Transport der Suspension in den Betonmischer verwendet werden.

Die Verbindung zwischen den jeweiligen Tanks und Mischer kann jeweils eine Flanschverbindung mit Schließvorrichtung, z.B. einem Flachschieber, sein.

Der erste und jeder weitere Kristallisationstank weist ein Rührwerkzeug auf und kann insbesondere ein Antrieb zur Bewegung des Rührwerkzeuges aufweisen.

Der erste und jeder weitere Kristallisationstank kann eine Seitenwandung und eine, vorzugsweise gewölbte, Bodenfläche aufweisen. Die Seitenwandung kann parallel zur Längsachse des Kristallisationstanks verlaufen. Das Rührwerk kann als Rührer einen rotierbaren Rühraufsatz aufweisen. Diese Ausformungen können vorzugsweise spiralförmige Ausformungen sein. Die Ausformungen können derart ausgebildet sein, dass sie über zumindest 50 % der Bodenfläche mit einem Abstand von weniger als 10 cm, vorzugsweise weniger als 5 cm, insbesondere zwischen 0,5 - 4 cm Entfernung führbar sind. Dadurch kann eine große Menge der Zementsuspension, einschließlich abgesetzter Bestandteile bewegt werden und vorzugsweise erneut suspendiert werden.

Die Ausformungen, insbesondere in der Ausgestaltung als spiralförmige Ausformungen, können in Richtung des Bodens Randabstreifer aufweisen. Während die Ausformungen vorzugsweise aus Metall ausgebildet sein können, sind die Randabstreifer vorzugsweise aus einem weicheren Material als die Ausformungen ausgebildet. Bevorzugt können die Randabstreifer in Form von Gummi- und/oder PTFE-Lippen ausgebildet sein.

Die Vorrichtung kann zwischen dem ersten Kristallisationstank und dem Betonmischer einen zweiten, dritten, vierten, fünften, und weiteren Kristallisationstank, vorzugsweise mit einem gesonderten Rührwerk, aufweisen. Dadurch kann eine Vergrößerung des Volumens an lagerbarer Zementsuspension zur Kristallisation erreicht werden. Ein zweiter Tank ist insbesondere bei großen benötigten Volumina vorteilhaft, da der zweite Tank zur Dosierung der aktivierten (Vormischer) und vorgelagerten (Kristallisationstank I) Suspension in den Betonmischer verwendetet werden kann. Hierdurch kann sichergestellt werden, dass keine Suspension ohne ausreichende Vorlagerungszeit den Kristallisationstank verlässt.

Weiterhin vorteilhaft kann die Vorrichtung als drucklos-betriebenes System ausgebildet sein. Ein offenes bzw.- drucklos-betriebenes System bedeutet, dass die Druckverhältnisse in jedem Behälter, also den Mischer und/oder dem oder den Kristallisationstanks gleich sind oder dass bei einem Auftreten von Druckunterschieden der Überführung der Zementsuspension ein Druckausgleich durch die geöffneten Ventile erfolgt.

Zumindest entlang der Verbindung zwischen dem ersten und/oder zweiten Kristallisationstank und dem Betonmischer ist ein Regelorgan zur Entleerung und/oder Teilentleerung des jeweiligen Kristallisationstanks in den Betonmischer angeordnet. Dieses Regelorgan kann vorzugsweise als Ventil, insbesondere als Quetschventil, ausgebildet sein.

Analog können entsprechende Regelorgane, z.B. Ventile, insbesondere Quetschventile auch zwischen dem Zementvormischer und dem ersten Kristallisationstank und/oder zwischen den Kristallisationstanks angeordnet sein.

Weiterhin ebenfalls vorteilhaft kann die Vorrichtung eine Anordnung zur Erfassung einer Messgröße zur Steuerung einer Notentleerung des ersten und/oder jeden weiteren Kristallisationstanks aufweisen. Eine solche Anordnung kann z.B. ein Sensor zur Drehmomenterfassung des rotierbaren Rührwerks und/oder - bei rotierendem Kristallisationstank - ein Sensor zur Drehmomenterfassung der rotierbaren Trommel des Kristallisationstank sein. Diese Messung lässt indirekt eine Aussage über den Zustand der Aushärtung der Zementsuspension zu.

Auch weitere Messgrößen wie z.B. die Viskosität, die Dichte, die damit verbundene Änderung der Schallgeschwindigkeit eines reflektierten Ultraschallsignals und/oder die Temperatur der Zementsuspension können zur Überwachung der Notfallentleerung genutzt werden.

Die Vorrichtung kann zudem eine Zugabevorrichtung, insbesondere eine Dosiervorrichtung, zur Zuführung eines Fließmittels, insbesondere in Abhängigkeit der erfassten Messgröße, aufweisen. Dadurch kann die Zusammensetzung der Zementsuspension bei Überschreiten eines Sollwertes neu eingestellt werden.

Die Vorrichtung, insbesondere zumindest einer der Kristallisationstanks, weist zudem erfindungsgemäß einen Sensor zur Temperaturermittlung der Zementsuspension aufweisen. Idealerweise sollte die Temperatur zwischen 25-45°C betragen. Entsprechende Sollwerte für Aufenthaltszeiten der Zementsuspension bei einer automatisierten Entleerung und/oder Teilentleerung des Kristallisationstanks können je nach der ermittelten Temperatur angepasst werden.

Bevorzugt kann der erste und/oder zweite, oder jede weitere Kristallisationstank ausgelegt sein für eine Menge von zumindest 2 Kubikmeter, vorzugsweise 0,5 - 4 Kubikmeter einer Zementsuspension. Derartige Mengen sind für Zementvormischer, insbesondere Ultraschall-Zementvormischer untypisch, da der Ultraschalleintrag, insbesondere bei intensivem Ultraschall, bei größeren Volumen nicht hinreichend homogen über das Volumen des Mischers erfolgen kann.

Die intensive Ultraschallbehandlung ermöglicht eine Aktivierung der Zementbestandteile. Im Unterschied zu einer ultraschallinitiierten Vibrationsvermischung durch Ultraschall, Rüttelung oder anderer Methoden weist die Ultraschallbehandlung in der bevorzugten Variante des vorliegenden Verfahrens folgende Kenndaten auf, welche einzeln oder in Kombination miteinander die Art der Ultraschallbehandlung näher charakterisieren:
Die Ultraschallsonde ist insbesondere als Sonotrode ausgebildet und arbeitet im Rahmen des vorliegenden Verfahrens bevorzugt in folgendem Bereich (Werte beziehen sich auf T=25°C und Normaldruck):
- Intensität des von der Ultraschallsonde emittierten Ultraschalls: 25-250 W/cm²
   Wenn Ultraschall in ein Medium eingebracht wird, werden die Partikel und das Medium in Schwingung versetzt. Diese Schwingung überträgt kinetische Energie der Ultraschallwelle. Die Intensität (I) entspricht dabei der Leistung z.B. Watt die pro Fläche transportiert wird. Die Einheit ist Leistung pro Fläche (z.B. W/cm²)
- Amplitude des von der Ultraschallsonde emittierten Ultraschalls: 15-500 µm, vorzugsweise 15 - 120 µm.
   Die Amplitude (u) beschreibt die Auslenkung der Ultraschallwelle (z.B. in µm) Bei gleichbleibender Frequenz führen höhere Amplituden zu einer Erhöhung der Intensität. Je größer die Amplitude ist, desto größer sind die Druckunterschiede während Hochdruck- und Niederdruckzyklen.
- Frequenz des von der Ultraschallsonde ausgesandten Ultraschalls: bevorzugt 10-30 kHz
   Die Frequenz (f) beschreibt die Rate der Schwingungen an der Spitze der Ultraschallsonde. Da die Bildung, das Wachstum und die Implosion von Dampfblasen ein zeitabhängiger Prozess ist, führen höhere Frequenzen zu kleineren Kavitationsblasen.
- Spezifischer Energieeintrag (ins Medium - Wasser): bevorzugt 25-250 Ws/ml

Eine Ermittlung der vorgenannten Werte kann beispielsweise in Wasser elektroakustisch mittels eines Hydrophons erfolgen.

Zur Dosierung des Zementes in den Vormischer kann eine Weiche nach der Zementwaage so angebracht werden, dass der Zement sowohl in den Betonmischer als auch in den Vormischer dosiert werden kann. Es kann aber auch eine eigene Dosierschnecke zum Vormischer geführt werden.

Es hat sich als energetisch und/oder technologisch günstig erwiesen, wenn lediglich ein Teil des zur Herstellung des Betons benötigten Zements als Zementsuspension angemischt und vorkristallisiert wird, während ein anderer Teil direkt im Betonmischer z.B. gemeinsam mit der Gesteinskörnung vermengt wird. Dies ist von besonderem Vorteil im Kontext des erfindungsgemäßen Verfahrens in Abgrenzung zum Stand der Technik.

Zum Erreichen der verbesserten Frühfestigkeit ist es nicht notwendig die gesamte Zementmenge vorzubehandeln, was zusätzliches Wasser für den Vormischprozess zur Verfügung stellt (der w/z-Wert der Suspension kann höher gewählt werden), Energie erspart und die Dimensionierung der benötigten Maschinen vorteilhaft verringert.

Weiterhin erfindungsgemäß ist ein Verfahren nach Anspruch 1 zur Herstellung eines Betons, insbesondere mit einer erfindungsgemäßen Vorrichtung.

Ein für die Entwicklung der Frühfestigkeit wesentliches Maß ist die Aufenthaltszeit. Diese entspricht der Verweil- bzw. Kristallisationszeit der vorgemischten Suspension im Kristallisationstank.

Die Aufenthaltszeit ist abhängig vom Betonproduktionsprozess (Mischzeit, Betonvolumen pro Stunde, Betonzusammensetzung) und der angestrebten Festigkeitssteigerung.

Ein Kristallisationstank (oder Speicher-/ Verweil-/ Lagertank) ist ein Behälter in dem die Suspension über einen vorher definierten Zeitraum (0,5 - 6 Stunden) unter kontinuierlichem Rühren/ Umwälzen gelagert wird. Nach der Verweilzeit wird die Suspension in den Betonmischer dosiert.

Die Aufenthalts- bzw. Verweilzeit entspricht hierbei der Zeit, die die aktivierte Suspension unter kontinuierlichem Rühren bzw. Umwälzen im Kristallisationstank verbleibt.

Vorteilhaft weist der erste Kristallisationstank einen Ablauf auf, welcher in einen Zulauf des Betonmischers oder in einen zweiten (oder dritten, vierten, ...) Kristallisationstank mündet. Die Vorrichtung weist zudem ein Regelorgan auf, welches im Ablauf des ersten Kristallisationstanks und/oder im Zulauf des Betonmischers angeordnet ist. Die Vorrichtung kann zudem eine erste Auswerte- und/oder Steuereinheit aufweisen, welche ausgerüstet ist zur Bedienung des Regelorgans für eine teilweise oder vollständige Entleerung des ersten Kristallisationstanks nach einem Aufenthaltszeitraum der Zementsuspension im ersten Kristallisationstank von 0,5 - 6 Stunden.

Weiterhin vorteilhaft kann der Zementvormischer einen Behandlungsbehälter mit einem Behandlungsraum aufweisen, wobei die mindestens eine Ultraschallsonde, zumindest teilweise in den Behandlungsraum hineinragt und wobei die Ultraschallsonde Ultraschall aussendet, wobei der ausgesandte Ultraschall bzw. das Ultraschallsignal, z.B. durch die Auswerte und/oder Steuereinheit, derart eingestellt ist, dass er eine Intensität von 25-250 W/cm² und eine Amplitude von 15-500 µm aufweist.

Bei der Herstellung des Betons kann zudem eine Zugabe einer ersten Teilmenge an Zement in den Zementvormischer erfolgen und eine Zugabe einer zweiten Teilmenge an Zement in den Betonmischer erfolgen, was energetisch besonders vorteilhaft ist.

Der Anteil an Zement, der so vorbehandelt wird beträgt bevorzugt zwischen 5 - 95%, besonders bevorzugt zwischen 10 - 25% vom gesamten Zementanteil. Die Steuerung bzw. die Einstellung des Sollwertes für den bevorzugten Aufenthaltszeitraum der Zementsuspension innerhalb des Kristallisationstanks kann vorteilhaft in Abhängigkeit von einer vorbestimmten Zeit bei einer vorbestimmten Temperatur erfolgen. Da die Kristallisation temperaturabhängig ist bietet diese Steuerung eine bessere Kontrolle über die Qualität der Zementsuspension.

Für einen besseren und umfassenderen Transport kann die Überführung der Zementsuspension in den Betonmischer stoßweise erfolgen.

Die Rührgeschwindigkeit im ersten und jedem weiteren Kristallisationstank und/oder Zulauf und/oder Ablauf an Zementsuspension in den ersten oder jedem weiteren Kristallisationstank kann durch einen Sensor und/oder Sensoranordnung gesteuert werden. Hierfür kann vorzugsweise einer oder mehrere Temperatursensoren, Ultraschallsensoren zur Bestimmung der Ultraschalllaufzeit und/oder Sensoren zur Drehmomenterfassung genutzt werden, um die Qualität der Zementsuspension und insbesondere deren Festigkeit zu überwachen.

Durch eine Temperaturregelung kann die Temperatur der Zementsuspension im ersten oder jedem weiteren Kristallisationstank auf eine Temperatur zwischen 10-45°C eingestellt werden. Die Einstellbarkeit auf unter 20°C, insbesondere 10-20°C, ermöglicht eine bessere Lagerung.

Die Kristallisationszeit bzw. Aufenthaltszeit als auch der Zeitpunkt der Notentleerung kann in Abhängigkeit von der Temperatur und/oder der vorgenannten erfassten Messgröße eingestellt werden.

Die Zugabe der Zementsuspension kann vorzugsweise erst nach einer Verweilzeit zwischen 1 - 8 Stunden in den Betonmischer erfolgen. Die Übergabe von Zementsuspension in den Betonmischer erfolgt nach einem vorher festgelegten Protokoll.

Der Wasser/Zement (w/z-) Wert der Zementsuspension kann vorteilhaft zwischen 0,5 - 2 betragen. Die Verweilzeit wird in Abhängigkeit der Reaktionsgeschwindigkeit des Zementes gewählt. Die angegebenen Zeiten sind optimal für die vorgenannte Angabe der Verweilzeit.

Die Vorlagerungszeit der Zementsuspension vor dem Überführen in den Betonmischer kann vorteilhaft zwischen 1 - 8 Stunden betragen.

Besonders bevorzugt kann der vorgenannte w/z-Wert aber auch die Ruhephase mit der vorgenannten Ultraschallbehandlung der Zementsuspension kombiniert werden.

Der Anteil an durch Ultraschall vorbehandeltem Zement im Beton kann vorteilhaft zwischen 5 - 95 Gew. %, idealerweise 10 - 25 Gew.% betragen.

Die Rührgeschwindigkeit im ersten und/oder zweiten Kristallisationstank und/oder Zulauf und/oder Ablauf an Zementsuspension in den ersten und/oder zweiten Kristallisationstank kann durch einen Sensor und/oder Sensoranordnung gesteuert werden. Hierfür kann vorzugsweise einer oder mehrere Temperatursensoren, Ultraschallsensoren zur Bestimmung der Ultraschalllaufzeit und/oder Sensoren zur Drehmomenterfassung genutzt werden, um die Qualität der Zementsuspension und insbesondere deren Festigkeit zu überwachen.

Weiterhin vorteilhaft im Rahmen des vorliegenden Verfahrens ist die Bereitstellung eines intelligenten Steuerverfahrens und/oder einer Steuervorrichtung zum Aufrechterhalten einer definierten Suspensionsqualität. Durch eine Reihe von Sensoren im Tank wird die Suspension permanent auf ihre Eigenschaften hin untersucht (v.a. Temperatur, Viskosität, Dichte, elektr. Leitfähigkeit, Ultraschalllaufzeit), bewertet und Maßnahmen basierend auf den Sensormessdaten, wie Hinzufügen neuer und Ablassen alter Suspension, eingeleitet.

Die Temperatur im Tank ist ein besonders wichtiger Faktor, der die Qualität der Suspension (= Reaktivität) beeinflusst. Diese kann vorteilhaft über eine Kühl- und Heizvorrichtung permanent im gewünschten Bereich gehalten, so z.B. durch Ausbildung einer doppelwandigen Behälterwandung als Teil des ersten und/oder zweiten Kristallisationstanks oder über Wärmetauscher am oder im Kristallisationstank.

Insbesondere kann ein sensorisches Erfassen einer stoffabhängigen physikalischen Messgröße der im ersten und/oder zweiten Kristallisationstank befindlichen Zementsuspension durchgeführt werden.

Bevorzugt kann sodann eine Steuerung der Zu- und/oder Ablaufmenge, der Rührgeschwindigkeit und/oder der Temperatur anhand der durch das sensorische Erfassen ermittelten Messwerte durchgeführt wird.

Nachfolgend wird eine erfindungsgemäße Vorrichtung zur Herstellung von Beton anhand eines Ausführungsbeispiels unter Zuhilfenahme der beiliegenden Zeichnungen näher erläutert. Die Zeichnungen enthalten dabei auch mehrere Merkmale, welche für sich genommen in naheliegender Weise mit anderen nicht dargestellten Ausführungsbeispielen kombinierbar sind. Die Ausführungsbeispiele in ihrer Gesamtheit sind dabei keineswegs beschränkend für den Schutzumfang der vorliegenden Erfindung zu verstehen. Es zeigen:
- Fig.1: eine Seitenansicht eines Ausführungsbeispiels umfassend einen Zementvormischer und einen ersten und einen zweiten Kristallisationstank einer erfindungsgemäßen Vorrichtung;
- Fig. 2: eine Perspektivansicht des Ausführungsbeispiels der Fig. 1;
- Fig. 3: eine Schnittansicht entlang der Längsachse der Kristallisationstanks;
- Fig. 4: eine schematische Darstellung einer Betonherstellung nach herkömmlichem Verfahren;

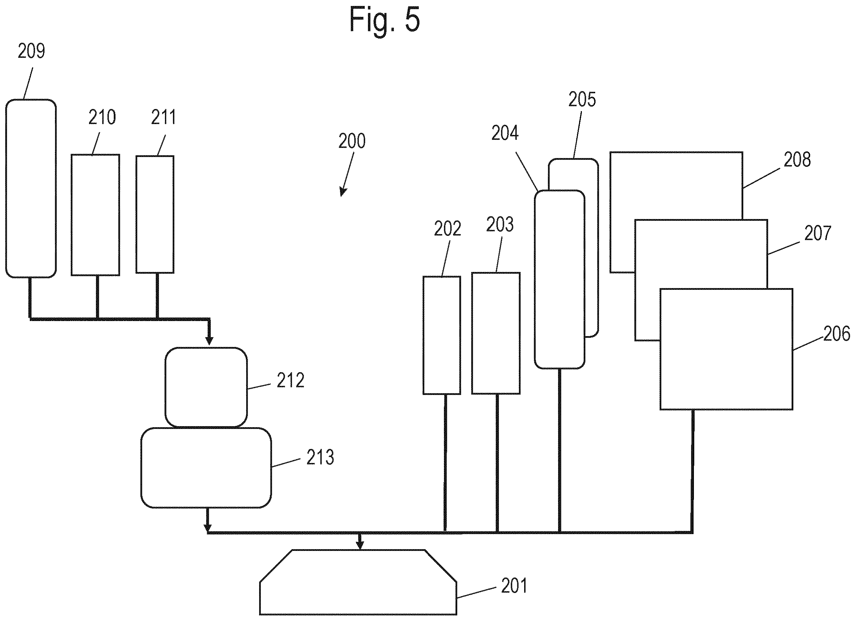

- Fig. 5: eine schematische Darstellung einer Betonherstellung nach einer Ausführungsform der vorliegenden Erfindung;
- Fig. 6: Diagramm zur Wärmefreisetzungsrate;
- Fig. 7: Darstellung einer Zusammensetzung einer ersten Betonmischung;
- Fig. 8: Darstellung einer Zusammensetzung einer zweiten Betonmischung;
- Fig. 9: Darstellung eines Mischungsverhältnisses aus Zementsuspension und Wasser;
- Fig. 10: Diagramm zur Korrelation zwischen Erstarrungsbeginn und Vorlagerzeit;
- Fig. 11: Diagramm zur Vorlagerzeit eines ultraschallbehandelten Zementmörtels bezogen auf das Setzfließ- und Ausbreitmaß; und
- Fig. 12: Diagramm zur Druckfestigkeit bezogen auf das Betonalter.

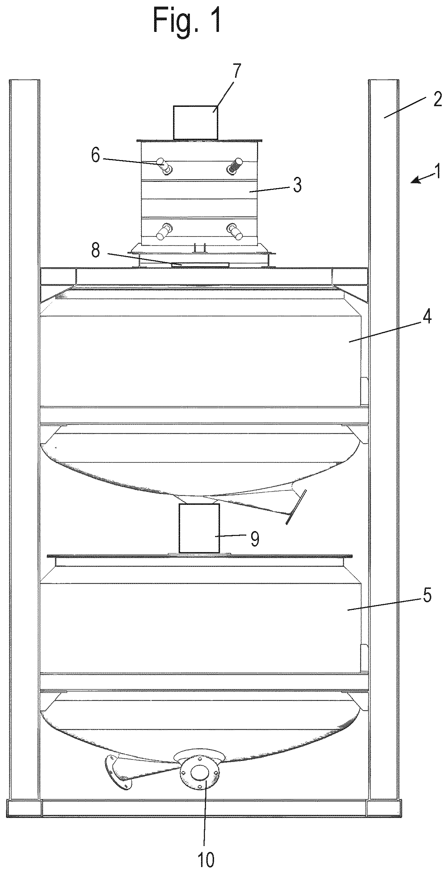

Fig. 1 zeigt eine erfindungsgemäße Vorrichtung 1, umfassend einen Zementvormischer 3 sowie zwei Kristallisationstanks 4 und 5.

Oberhalb des Zementvormischers 3 ist eine Zulauföffnung 7 vorgesehen.

Der Zementvormischer 3 und die zwei Kristallisationstanks 4 und 5 ins über ein Maschinengestell 2 miteinander verbunden.

Der Zementvormischer 3 weist Ultraschallsonden 6 auf, welche sich durch die Wandung des Zementvormischers in den Innenraum erstrecken.

Zwischen dem Zementvormischer 3 und den beiden Tanks 4 und 5 sind Überleitungen vorgesehen. Die Überleitungen können Regelorgane, z.B. Ventilvorrichtungen, aufweisen. Der Tank 5 weist einen Ablauf 10 auf.

Jeder der Kristallisationstanks 4 und 5 sowie der Zementvormischer 3 weist Rührwerke 7-9 auf.

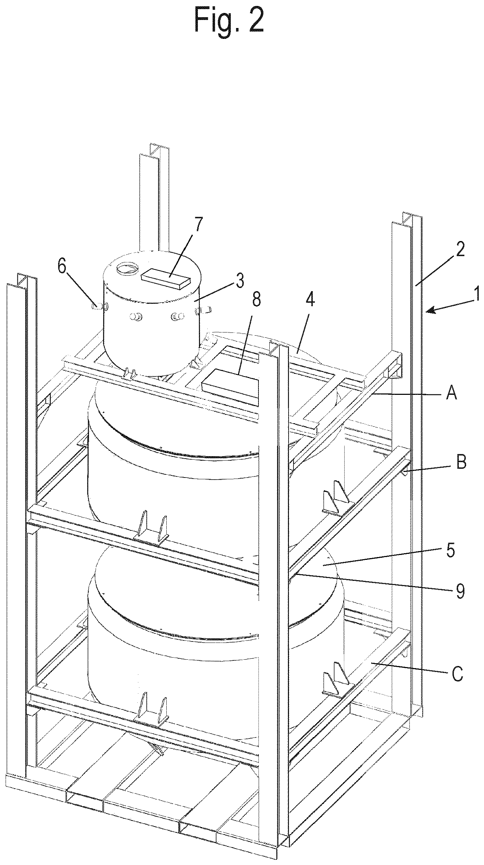

Fig. 2 zeigt eine Perspektivansicht der Vorrichtung der Fig. 1. Man erkennt die Lagerebenen A, B und C entlang welchen die jeweiligen vorgenannten Behältnisse gelagert sind.

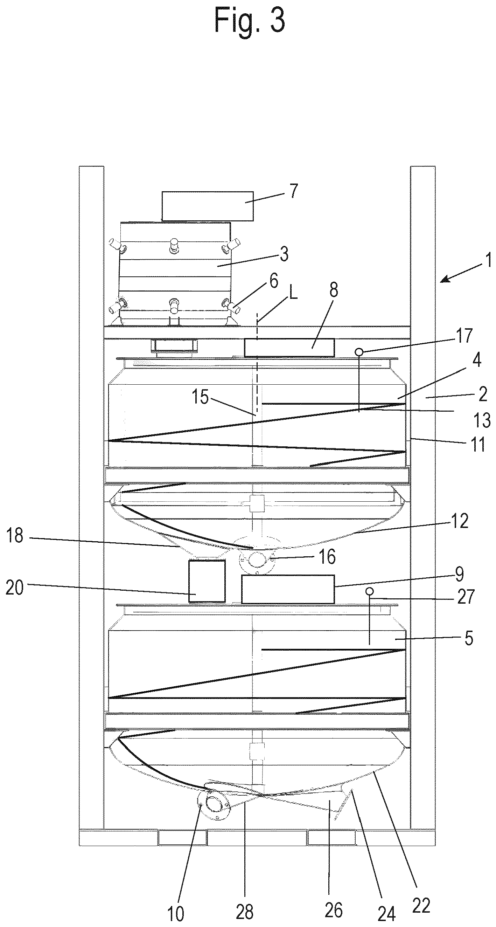

In Fig. 3 sind weitere Details offenbart. So weist der Kristallisationstank 4 einen ein Rührwerk 8 mit einer Stange 15 sowie spiralförmig gewundenen Rührblättern 13. Der Kristallisationstank weist einen zylinderförmigen Mantelabschnitt 11 und einen gewölbt ausgebildeten Bodenbereich 12 auf.

Ein Sensorelement 17 ist im oberen Bereich des Kristallisationstanks 4 angeordnet. Dies kann beispielsweise ein Temperatursensor sein. Der Kristallisationstank 4 weist einen Ablauf 18 auf, der in einer Überleitung 20 übergeht. Weiterhin weist der Kristallisationstank 4 eine Not-Ableitung 16 auf, über welche der Tank 4 z.B. im Fall einer überlagerten Zementsuspension notentleert werden kann.

Der Kristallisationstank 5 ist ähnlich aufgebaut. Erkennbar sind sowohl das Sensorelement 27 als auch das Rührwert 9. Im Bodenbereich 22 befinden sich zwei Ablaufstutzen 26 und 28, die jeweils Flanschenden 24 aufweisen. Einer der beiden Ablaufstutzen dient abermals als Notentleerung, während der andere eine Überführung in den Betonmischer ermöglicht.

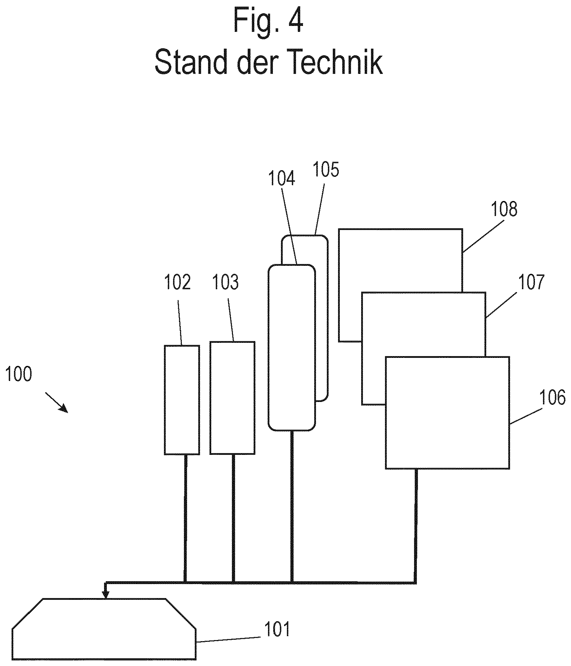

Fig. 4 zeigt ein konventionelles Verfahren 100 Herstellung von Beton. Dabei werden Wasser 103, Zement 104 und 105, Zusatzstoffe 102, sowie ggf. Bindemittel und Zusatzmittel mit Kies 106, 107 oder Sand 108 in einem Betonmischer 101 vermischt.

Der Fachmann für Beton kennt Bindemittel als anorganische oder organische Substanzen, welche im plastischen Zustand verarbeitbar sind und die im Laufe einer bestimmten Zeit erhärten und dabei andere Stoffe, z. B. Gesteinskörnungen, fest miteinander verbinden. Die in der Betonindustrie eingesetzten Bindemittel sind mineralischen Ursprungs und werden, mit einigen Ausnahmen, aus bestimmten Gesteinen durch Brennen gewonnen und mehlfein gemahlen. Mit Wasser angemacht entsteht zuerst der Bindemittelleim. Durch chemische Umsetzungen, teilweise auch durch physikalische Oberflächenkräfte, kann sich der Bindemittelleim in einen steinartigen Zustand verfestigen, wobei etwaige Füllstoffe miteinander verkittet werden können.

Weiter kennt der Fachmann für Beton den Begriff der Zusatzmittel bzw. Betonzusatzmittel. Dabei handelt es sich um Stoffe, die dem Beton in feinverteilter Form, z.B. flüssig, pulverförmig oder auch als Granulat oder als Paste, in geringen Mengen zugesetzt werden, um durch chemische oder physikalische Wirkung bestimmte Eigenschaften des Frischbetons oder des erhärteten Betons zu beeinflussen. Typische Zusatzmittel sind Betonverflüssiger, Fließmittel, Luftporenbildner, Dichtungsmittel, Verzögerer, Beschleuniger, Einpresshilfen und/oder Stabilisierer.

Zudem kennt der Fachmann für Beton den Begriff der Zusatzstoffe bzw. Betonzusatzstoffe. Dabei handelt es sich um fein verteilte Stoffe, die im Beton verwendet werden, um bestimmte Eigenschaften zu verbessern oder zu erreichen. Derartige Stoffe sind als Volumenbestandteile in deutlich größerer Menge in einer Betonzusammensetzung vorhanden als die Zusatzmittel. Sie werden daher auch Füller genannt. Gemäß DIN EN 206-1 und DIN 1045-2 unterscheidet man zwei Arten von anorganischen Zusatzstoffen. Zusatzstoffe des Typs I sind nahezu inaktive Zusatzstoffe wie Gesteinsmehle, Gesteinskörnungen oder Pigmente. Zusatzstoffe des Typs II sind puzzolanische oder latenthydraulische Zusatzstoffe wie Trass, Flugasche oder Silicatstaub.

Schließlich enthält eine Betonmischung einen erheblichen Anteil Gesteinskörnungen wie Kiese und Sande, deren Körnung und deren Anteil in Abhängigkeit von der Körnung je nach Art des Betons variieren kann. Diese Gesteinskörnungen werden gelegentlich auch zusammen mit weiteren Materialien unter dem Oberbegriff der Zuschlagstoffe zusammengefasst.

Kern der vorliegenden Erfindung ist es nun ein Verfahren bereitzustellen, welches diese technologischen Hürden löst und dennoch die hohen Frühfestigkeiten eines Betons mit z.B. Ultraschallvormischstufe gewährleistet.

Dabei werden Zement 209, Wasser 210 und Zusatzstoffe 211 in einem Zementvormischer 212 gemischt und ultraschallaktiviert. Sodann wird die Zementsuspension in einen Kristallisationstank 213 überführt und von dort in einen Betonmischer 201. Weiter in den Betonmischer 201 können im Rahmen des erfindungsgemäßen Verfahrens 200 Zusatzmittel 202, Wasser 203, Zement 204 und 205 sowie Kies 206, 207 und Sand 208 in den Betonmischer zugeführt werden

Der Erfindung liegt die Tatsache zu Grunde, dass es für die Herstellung einer Zementsuspension einen vorteilhaften w/z-Wert bzw. einen vorteilhaften w/z-Bereich gibt, in diesem sich die Suspension gut homogenisieren und aktivieren lässt (z.B. mittels Ultraschalls). Dieser vorteilhafte w/z-Wert hängt von der Zementart und den eingesetzten Zusatzmitteln ab und liegt zwischen 0,5 und 2. Weiterhin liegt der Erfindung die Tatsache zu Grunde, dass nicht der gesamte Anteil an Zement und Wasser vorgemischt und aktiviert werden muss, um eine deutliche Steigerung der Frühfestigkeiten zu bewirken.

In einer bevorzugten Variante der vorliegenden Erfindung wird die im Zementvormischer bereitgestellte Zementsuspension aus Zement, Wasser und ggf. Zusatzmittel als optionale Komponente hergestellt. Zuschlagstoffe hingegen sind in der Zementsuspension nicht vorgesehen.

Das bedeutet ein Teil des Zementes wird in den Vormischer zur Aktivierung dosiert und ein Teil des Zementes wird in dem Betonmischer dosiert. Dies kann entweder über ein eigene Dosiereinrichtung (Silo + Förderschnecke) am Vormischer erfolgen oder an der vorhandenen Betonmischanlage durch einen Verteiler an der Zementwaage und einer Förderschnecke von der Zementwaage zum Vormischer.

Weiterhin ist Teil des erfindungsgemäßen Verfahrens, die vorgemischte und aktivierte Zementsuspension nicht unmittelbar nach Mischende in den Betonmischer zu dosieren, sondern in einen nach dem Suspensionsmischer gelagerten Ruhe- bzw. Kristallisationstank zu befördern. Hierbei weist der Kristallisationstank ein Volumen von etwa der Menge an Suspension auf, die notwendig für eine Stunde Betonproduktion ist.

Dies hat den Vorteil das das notwendige Volumen des Vormischers reduziert ist gegenüber der Variante die den gesamten Anteil an Zement und Wasser (und ggf. Sand) zur Vorbehandlung ansetzt. Die Herstellung und Aktivierung der Suspension mit anschließender Nachlagerung im Kristallisationstank hat weiterhin den Vorteil, dass die Suspension nach einer ausreichenden Kristallisationszeit beliebig schnell abgenommen bzw. dosiert werden kann und somit die Mischzeiten weiterhin kurz gewählt werden können. Die Ruhe bzw. Kristallisationszeit bewirkt eine deutliche Steigerung der Frühfestigkeiten, sogar im Vergleich zur Variante, bei der die gesamte rechnerisch zur Verfügung stehende Zement- und Wassermenge vorgemischt und aktiviert wird. Ohne Ruhephase wird dieses Potential nicht erreicht. Wird in der Vormischstufe Ultraschall zur Aktivierung eingesetzt, sind die Frühfestigkeiten nochmals deutlich erhöht. Diese Ruhephase beträgt idealerweise, je nach Zementart und Zusammensetzung der Suspension, zwischen 1-8 Stunden.

Die Mischzeit des Suspensionsmischprozesses im Produktionsprozess sollte sehr kurz sein, um kurze Gesamtmischzeiten zu ermöglichen. Dies ist insbesondere bei einer Aktivierung der Zementsuspension, z. B. durch Ultraschall, nicht immer gewährleistet. Bei der Produktion von großen Betonelementen (z.B. Brückenbindern) müssen in kurzer Zeit größere Mengen Beton produziert werden, um das Betonbauteil zügig fertigzustellen. Auch dies stellt für die Vormischung einer Zement-Suspension in einem Ultraschall-Vormischer eine besondere Herausforderung dar, da die Mischkammer für eine effektive Ultraschallanwendung auf eine bestimmte Baugröße beschränkt ist. Durch die Produktion der Suspension "auf Vorrat", können auch diese Bauteile ohne relevante Steigerung der Betonmischzeiten hergestellt werden.

Gegenüber dem Stand der Technik zeichnet sich das hier dargestellte Verfahren durch folgende neuartige Ansätze aus:
- Es wird nur der, für eine optimale Festigkeitsentwicklung notwendige Anteil an Zementsuspension vorgemischt und aktiviert, idealerweise zwischen 10
   - 25 % des Zementanteils.
- Die vorgemischte und aktivierte Zementsuspension wird auf Vorrat in ein Ruhe- bzw. Kristallisationstank befördert und verweilt dort eine gewisse Zeit, idealerweise zwischen 1 - 8 Stunden, und wird bei niedrigen Scherraten kontinuierlich durchmischt oder durch eine Pumpe umgewälzt.
- Die Entnahme aus dem Kristallisationstank erfolgt nach der Vorlagerungszeit sukzessive, wobei die Betonmischzeiten nicht verlängert werden.

Der Problematik von hohen Feuchten der Gesteinskörnung kann damit effektiv begegnet werden.

Die Mischzeiten des Betonmischprozesses werden nicht verlängert.

Die Frühfestigkeiten werden, bei gleicher Betonzusammensetzung, deutlich gesteigert.

Bei Ergänzung des Kristallisationstankes um weitere Tanks gleicher Größe, können selbst sehr große Betonvolumen zielsicher mit aktivierter Zementsuspension hergestellt werden (z.B. Transportbetonproduktion)
Nachfolgend wird auf eine optimierte Vorlagerzeit in dem Kristallisationstanks beschrieben:

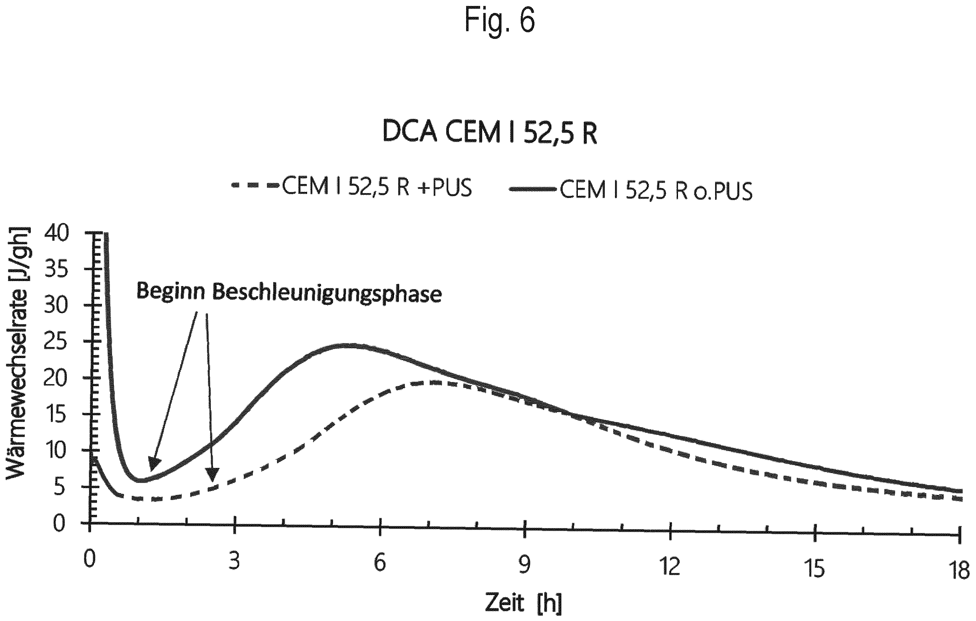

Fig. 6 zeigt einen zeitlichen Verlauf einer Wärmewechselrate in J/gh. Dabei handelt es sich um eine wärmeleitungskalorimetrische Messung von Portlandzement, welcher im Diagramm als CEM I 52,5 R bezeichnet wird, mit und ohne Ultraschallbehandlung, im Diagramm als PUS bezeichnet.

Man erkennt einen deutlich vorgelagerten Beginn der Beschleunigungsphase und ein Maximum der Wärmeentwicklung nach etwa 4-5h.

Die Reaktion von Zement mit Wasser folgt einem spezifischen kinetischen Pfad. Bei einem typischen Wasser-zu-Zement-Wert von 0,5 sieht der Verlauf der Wärmefreisetzungsrate aus wie in Fig. 6.

In der Patentanmeldung DE 10 2020 132 015.9, wird die Anwendung einer Vorlagerung von aktivierter Zementsuspension vorgeschlagen, die den Betonherstellungsprozess nicht stört und dennoch die Frühdruckfestigkeiten steigert.

Weiterführende Untersuchungen haben nun ergeben, dass es prozesstechnische Vorteile bietet, den Wassergehalt der Suspension und/oder die Vorlagerungszeit z.T. deutlich zu erhöhen.

Konkret bedeutet das, dass der Zugabezeitpunkt der Suspension an die Wärmefreisetzungsrate gekoppelt wird und die Suspension erst dosiert wird, wenn die Kurve die Ruhephase zwischen 1 - 3 Stunden überwunden hat und einen erneuten Anstieg der Wärmefreisetzung (= chemische Reaktion) verzeichnet.

Dieser Zeitpunkt variiert stark mit den eingesetzten Materialien (Zement- und Fließmitteltyp sowie Wassergehalt) und sollte vorher bestimmt werden.

Die bevorzugten Parameter für die Zementsuspension lauten nun:
- $Wasser / Zement \left(w/z-\right) Wert = 0 , 5 - 2$
- $Vorlagerungszeit = 1 - 8 Stunden$
- Anteil vorbehandelter Zement 5 - 95 %, idealerweise 10 - 25%

Der w/z-Wert muss so gewählt werden, dass der Anstieg der Kurve (sog. "Beschleunigungsphase") nicht zu lange dauert (w/z-Wert niedriger) aber auch so, dass es während der Vorlagerung nicht zu einer Verfestigung des Materials kommt (w/z-Wert höher). Ein dafür gut geeigneter w/z-Wert liegt um 1,0 ± 0,25, je nach Zementart und Fließmitteltyp und -menge.

Die Vorlagerungszeit hängt dann von dem gewählten w/z-Wert und der Reaktivität des Zementes ab. Um den mit der Vorlagerung verbundenen prozesstechnischen Aufwand gering zu halten, ist eine Vorlagerungszeit von maximal 4 Stunden angestrebt.

Mit diesem Verfahren kann die Frühfestigkeit nochmals deutlich gesteigert werden und der Anteil an Zement der vorgemischt und aktiviert werden muss kann reduziert werden.

In einem beispielhaften Verfahrensablauf wird ein Teil des Zementes mit Wasser vorgemischt, beschallt und anschließend über einen längeren Zeitraum gelagert. Nach der Lagerung wird die Zementsuspension in den Betonmischer dosiert. Wie schon zuvor beschrieben, erfolgt durch die Beschallung eine Ultraschallaktivierung. Sie erfolgt bei einer Intensität von 25-250 W/cm² und einer Amplitude des Ultraschalls von 15-500 µm.

In der Suspension werden Hydratkeime gebildet, welche wesentlich die Frühfestigkeit von Beton beeinflussen. Dies kann u.a. durch mikroskopische Aufnahmen belegt werden.

Da das rechnerisch zur Verfügung stehende Wasser für einen Vorm ischprozess oft nicht ausreicht, wird der vorzumischende Anteil an Zement reduziert.

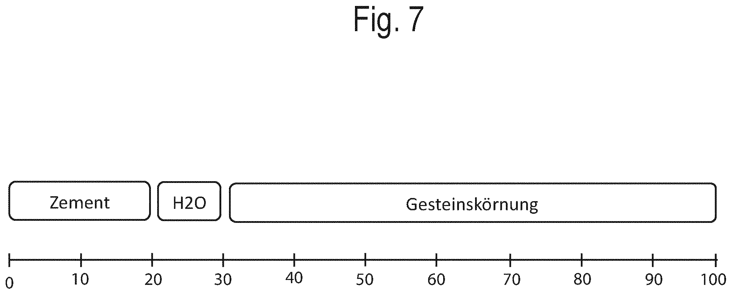

Im Beton mit trockener Gesteinskörnung sind die 3 Hauptkomponenten - wie in Fig. 7 dargestellt - verteilt.

In diesem Fall ist der Wassergehalt gering aber ausreichend für einen Vormischprozess, da unter Einsatz von Fließmittel immer noch eine fließfähige Suspension hergestellt und dosiert werden kann.

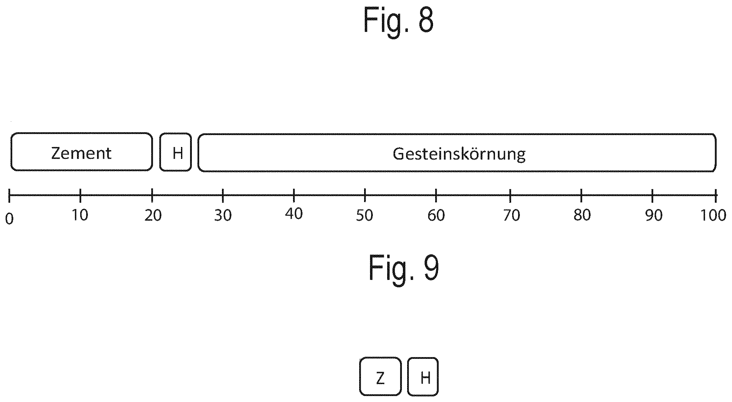

Ist die Gesteinskörnung feucht, erhöht sich der Anteil der Gesteinskörnung in der Stoffraumrechnung und die des Wassers reduziert sich um den Anteil an der Gesteinskörnung gebundener Feuchte. Siehe hierzu Fig. 8. Fig. 7 und 8 zeigen jeweils die Dosiermengen der jeweiligen Komponenten. Die Gesteinskörnung im Fall von Fig. 8 ist gegenüber Fig. 7 feuchter und enthält daher mehr Wasser. Die Figuren zeigen mit dem Balken "H2O" lediglich die Menge an zudosiertem Wasser zusätzlich zur Gesteinskörnung an. "H" und "H2O" sind in den Figuren synonym zu verstehen.

Für den Mischprozess steht nun nur noch eine viel zu geringe Menge Wasser zur Verfügung, der Vorm ischprozess lässt sich (wenn überhaupt) nur noch sehr schwer anwenden. Im Falle einer Ultraschallbehandlung, führt die hohe Feststoffkonzentration häufig zu unerwünschten Nebeneffekten wie negativen Fließmittel-Zement-Interaktionen, einer starken Erwärmung und Problemen bei der Dosierung/Entleerung des Vormischbehälters.

Um dennoch die Vorteile eines Vormischprozesses mit Ultraschall zu gewährleisten, wurde das Vormisch- und Lagerkonzept entwickelt. Der Kern hierbei ist die Verwendung nur einer Teilmenge des zur Verfügung stehenden Zementes - siehe Fig. 9.

Durch den wesentlich geringen Feststoffgehalt der so hergestellten Suspension, ist der Herstellungsprozess gegenüber der Variante bei der der gesamte Zement vorgemischt wird, erleichtert.

Allerdings ist die Anzahl der Hydratkeime, die hierdurch gebildet werden können, auf die Menge des Zementes begrenzt. Dies führte zu dem Konzept, die Suspension so lange zu lagern bzw. zu kristallisieren bis sich eine für die Beschleunigung der Hydratation ausreichende Menge Hydratkeime gebildet hat. Die Anzahl der Hydratphasen steigt mit der Vorlagerungszeit. Im Folgenden ist dazu eine Messung des Erstarrungsbeginns, also der Zeitpunkt, an dem der Erhärtungsprozess so weit fortgeschritten ist, dass der Beton nicht weiterverarbeitet werden kann, dargestellt.

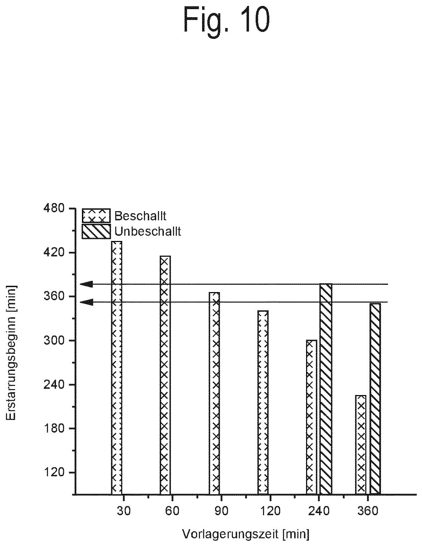

In der Fig. 10 ist der Erstarrungsbeginn eines Zementmörtels mit folgenden Parametern zu sehen:
- w/z-Wert des Mörtels = 0,50
- w/z-Wert der vorgelagerten Suspension = 1,0
- Anteil an vorbehandelten Zement = 25 %
- Beschallung der Suspension mit 20 kHz und 60 Sekunden/ Liter

In der Fig. 10 ist zu erkennen, dass der Erstarrungsbeginn (Y-Achse) mit zunehmender Vorlagerungsdauer (X-Achse) abnimmt. Besonders ausgeprägt ist dieses Verhalten bei Suspensionen die beschallt wurden (kreuzschraffiert). Ohne Beschallung ist die Reduktion der Erstarrungszeit nicht so deutlich ausgeprägt (strichschraffiert).

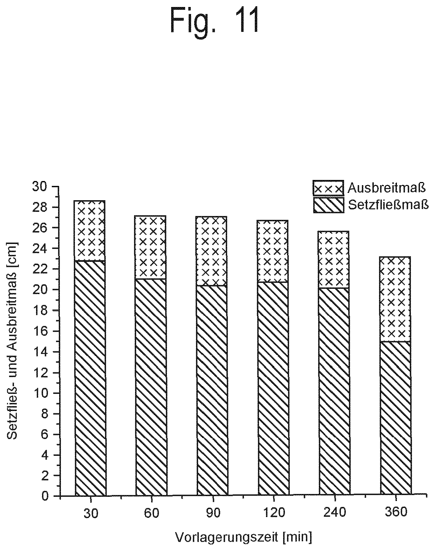

Mit der Vorlagerung wird in der Regel auch die Verarbeitbarkeit beeinflusst. Diese wird an Zementen mittels Setzfließ- und Ausbreitmaß bestimmt. In der Fig. 11 ist das Setzfließ- und Ausbreitmaß des zu Fig. 10 bereits erläuterten Zementmörtels mit unterschiedlich lang vorgelagerter Zementsuspension dargestellt. Dabei wird gemessen, wie weit ein Mörtel ohne Rütteln (Setzfließmaß) und mit 15 Stößen (Ausbreitmaß) auf einem Tisch fließt. Hierbei kann man erkennen, dass sowohl das Setzfließmaß als auch das Ausbreitmaß zunehmender Vorlagerungszeit abnehmen. Das heißt die Verarbeitbarkeit des Mörtels wird reduziert. In den ersten 240 Minuten ist die Reduktion allerdings nur gering ausgeprägt, was keine signifikanten Änderungen für den Beton bedeutet. Nach 240 Minuten kommt es zu einem stärkeren Abfall.

Aus diesen Ergebnissen lässt sich schlussfolgern, dass die ideale Vorlagerungszeit für den betrachteten Mörtel circa 240 Minuten beträgt. Hierbei sind die Änderungen der Verarbeitbarkeit gering bei gleichzeitig deutlicher Steigerung der Frühfestigkeit.

Für den Betonmaßstab lässt sich der Effekt mit folgenden Daten verdeutlichen:
Es wurde ein Beton mit Portlandzement (CEM I 52,5 R) und einem w/z-Wert von 0,47 hergestellt. Der Beton wurde mit einem Fließmittel (Typ: Polycarboxylatether) mit 240 Minuten vorgelagerter und beschallter Suspension (w/z = 1,0) und einem Volumen von 0,3 m³ gemischt.

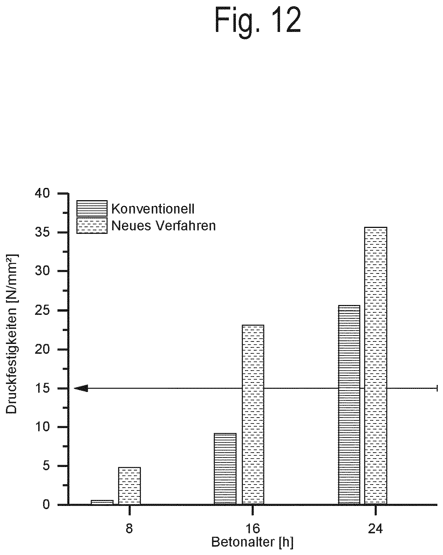

In der Fig. 12 ist die Druckfestigkeitsentwicklung der ersten 24 Stunden eines Betons hergestellt nach dem erfindungsgemäßen Verfahren in Gegenüberstellung zu einem konventionell-hergestellten Beton zu sehen. Hierbei ist deutlich zu erkennen, dass die Betonprobe mit vorgelagerter Suspension nach dem erfindungsgemäßen Verfahren zu allen gemessenen Zeitpunkten deutlich höhere Druckfestigkeiten aufweist.

### Bezugszeichen

- 1: Vorrichtung
- 2: Maschinengestell
- 3: Zementvormischer
- 4: Kristallisationstank
- 5: Kristallisationstank
- 6: Ultraschallsonde
- 7: Rührwerk
- 8: Rührwerk
- 9: Rührwerk
- 10: Ablauf
- 11: Mantelabschnitt
- 12: Bodenbereich
- 13: Rührblatt
- 14 - 15: Stange
- 16: Not-Ableitung
- 17: Sensorelement
- 18: Ablauf
- 19 - 20: Überleitung
- 21 - 22: Bodenbereich
- 23 - 24: Flansch-Ende
- 25 - 26: Ablaufstutzen
- 27: Sensorelement
- 28: Ablaufstutzen

- 100: Verfahren
- 101: Betonmischer
- 102: Zusatzstoffe
- 103: Wasser
- 104: Zement
- 105: Zement
- 106: Kies
- 107: Kies
- 108: Sand

- 201: Betonmischer
- 202: Zusatzmittel
- 203: Wasser
- 204: Zement
- 205: Zement
- 206: Kies
- 207: Kies
- 208: Sand
- 209: Zement
- 210: Wasser
- 211: Zusatzstoffe
- 212: Zementvormischer
- 213: Kristallisationstank

## Patentansprüche

1. Verfahren zur Herstellung eines Betons, umfassend **die folgenden Schritte:**
i) Herstellen einer Zementsuspension in einem Zementvormischer (212) unter Einsatz von Ultraschall;
ii) Rühren der Zementsuspension in einem Kristallisationstank (213) über einen vorbestimmten Aufenthaltszeitraum, und
iii) Überführen der Zementsuspension nach einem vorbestimmten Aufenthaltszeitraum in einen Betonmischer (201).

2. Verfahren nach Anspruch 1, **dadurch gekennzeichnet, dass** der Zementvormischer (212) zum Anmischen einer Zementsuspension vorgesehen ist und zur Bereitstellung einer Zementsuspension zumindest einen Ultraschallerzeuger in Form einer Ultraschallsonde (6) und einen Behandlungsraum aufweist, wobei die mindestens eine Ultraschallsonde (6), zumindest teilweise in den Behandlungsraum hineinragt und wobei die Ultraschallsonde (6) Ultraschall aussendet, wobei der ausgesandte Ultraschall eine Intensität von 25-250 W/cm² und eine Amplitude von 15-500 µm aufweist.

3. Verfahren nach einem der vorhergehenden Ansprüche 1 oder 2, **dadurch gekennzeichnet, dass** die Steuerung des Aufenthaltszeitraums in Abhängigkeit von einer vorbestimmten Zeit bei einer vorbestimmten Temperatur erfolgt und/oder **dass** die Verweilzeit der Suspension in Anlehnung an eine vorher ermittelte Wärmefreisetzung erfolgt.

4. Verfahren nach einem der vorhergehenden Ansprüche, **dadurch gekennzeichnet, dass** die Vorlagerungszeit der Zementsuspension vor dem Überführen in den Betonmischer (201) zwischen 1 - 8 Stunden beträgt.

5. Verfahren nach einem der vorhergehenden Ansprüche, **dadurch gekennzeichnet, dass** der Anteil an vorbehandeltem Zement im Beton zwischen 5 - 95 Gew. %, idealerweise 10 - 25 Gew.% beträgt.

6. Vorrichtung (1) zur Herstellung eines Betons nach einem Verfahren nach einem der vorhergehenden Ansprüche umfassend:
i einen Zementvormischer (3) zum Anmischen einer Zementsuspension, wobei der Zementvormischer (3) zur Bereitstellung einer Zementsuspension zumindest einen Ultraschallerzeuger, insbesondere eine Ultraschallsonde (6), aufweist
ii einen Betonmischer (201) zum Herstellen einer Betonmischung aus der vorgemischten Zementsuspension, insbesondere unter Zufuhr von Gesteinskörnung (206-208), wobei die Vorrichtung (1) ein Zementlagersilo mit einer ersten Teilzuleitung von Zement zum Zementvormischer (212) aufweist, **dadurch gekennzeichnet, dass** das Zementlagersilo (10) mit einer zweiten Teilzuleitung von Zement zum Betonmischer (201) versehen ist, und **dass** die Vorrichtung (1) weiter umfasst:
iii zumindest einen ersten Kristallisationstank (4 oder 5) welcher eine Kristallisation einzelner im Zement enthaltener Bestandteile vor deren Zugabe zum Beton ermöglicht, insbesondere eine Kristallisationstankanordnung mit dem ersten Kristallisationstank (4 oder 5), zur Steigerung der Frühfestigkeiten des Betons; wobei der erste Kristallisationstank (4 oder 5) ein Rührwerk (8, 9) aufweist.

7. Vorrichtung nach Anspruch 6, **dadurch gekennzeichnet, dass** der Zementvormischer (3), Kristallisationstank (4 oder 5) und Betonmischer (201) derart zum Erdschwerefeld angeordnet, dass die Zementsuspension schwerkraftbedingt vom Zementvormischer (3), in den Kristallisationstank (4 oder 5) und von dort in den Betonmischer (201) fließen kann.

8. Vorrichtung nach einem der vorhergehenden Ansprüche 6 oder 7, **dadurch gekennzeichnet, dass** die Vorrichtung (1) zwischen dem ersten Kristallisationstank (4) und dem Betonmischer (201) einen zweiten Kristallisationstank (5), vorzugsweise mit einem gesonderten Rührwerk (9), aufweist.

9. Vorrichtung nach einem der vorhergehenden Ansprüche 6-8, **dadurch gekennzeichnet, dass** die Vorrichtung (1) eine Anordnung (17, 27) zur Erfassung einer Messgröße, insbesondere zur Steuerung einer Notentleerung des ersten und/oder zweiten Kristallisationstanks (4, 5) aufweist.

10. Vorrichtung nach einem der vorhergehenden Ansprüche 6-9, **dadurch gekennzeichnet, dass** die Vorrichtung eine Zugabevorrichtung, insbesondere eine Dosiervorrichtung, zur Zuführung eines Fließmittels, insbesondere in Abhängigkeit der erfassten Messgröße, aufweist.

11. Vorrichtung nach einem der vorhergehenden Ansprüche 6-10, **dadurch gekennzeichnet, dass** der erste und/oder zweite Kristallisationstank (4, 5) ausgelegt fur eine Menge von zumindest 2 Kubikmeter, vorzugsweise 1,5 - 4 Kubikmeter einer Zementsuspension.

12. Vorrichtung nach einem der vorhergehenden Ansprüche 6-11, **dadurch gekennzeichnet, dass** der erste und/oder der zweite Kristallisationstank (4, 5) eine Wärmetauscheranordnung, insbesondere ein Doppelwandungssegment, zur Temperierung der Zementsuspension entlang der Wandung des Kristallisationstanks (4, 5) aufweist.

13. Vorrichtung nach einem der vorhergehenden Ansprüche 6-12, **dadurch gekennzeichnet, dass** die Vorrichtung eine Zementwaage zur Dosierung einer ersten Teilmenge von Zement zum Zementvormischer (212) und zur Dosierung einer zweiten Teilmenge von Zement zum Betonmischer (201) aufweist.

14. Vorrichtung nach einem der vorhergehenden Ansprüche 6-13, **dadurch gekennzeichnet, dass** die Vorrichtung (1) einen Sensor zur Temperaturermittlung der Zementsuspension aufweist oder **dass** der erste und/oder zweite Kristallisationstank (4, 5) ein Sensorelement zur Ermittlung der Qualität der im Kristallisationstank befindlichen Zementsuspension, insbesondere einen Temperatursensor, einen Drehmomentsensor (Viskosität), einen Leitfähigkeitssensor zur Bestimmung der thermischen oder elektrischen Leitfähigkeit, einen Sensor zur Bestimmung der Ultraschalllaufzeit, der Ultraschallgeschwindigkeit und/oder einen Dichtesensor aufweist.

15. Vorrichtung nach Anspruch 14, **dadurch gekennzeichnet, dass** die Vorrichtung (1) eine Steuer- und/oder Auswerteeinheit aufweist zur Steuerung eines Aktuators, insbesondere einer Temperiervorrichtung, eines Zulaufventilsund/oder eines Ablaufventils basierend auf die durch das Sensorelement ermittelten Messwerte.

## Claims

1. Method for producing concrete, comprising the following steps:
i) preparing a cement suspension in a cement premixer (212) by use of ultrasound;
ii) agitating the cement suspension in a crystallization tank (213) for a predetermined residence time, and
iii) transferring the cement suspension to a concrete mixer (201) after a predetermined residence time.

2. Method according to claim 1, **characterized in that** the cement premixer (212) is designed to mix a cement suspension and comprises at least one ultrasonic generator in the form of an ultrasonic probe (6) and a treatment chamber for providing a cement suspension, wherein the at least one ultrasonic probe protrudes at least partially into the treatment chamber and wherein the ultrasonic probe (6) emits ultrasound, wherein the emitted ultrasound has an intensity of 25 - 250 W/cm² and an amplitude of 15 - 500 µm.

3. Method according to claim 1 or 2, **characterized in that** the residence time is controlled depending on a predetermined time at a predetermined temperature and/or **that** the residence time of the suspension is based on a previously determined heat release.

4. Method according to any one of the preceding claims, **characterized in that** the pre-storage time of the cement suspension prior to transfer into the concrete mixer (201) is between 1 and 8 hours.

5. Method according to any one of the preceding claims, **characterized in that** the proportion of pretreated cement in the concrete is between 5 - 95 wt.-% and ideally 10 - 25 wt.-%.

6. Device (1) for producing concrete according to a method according to any one of the preceding claims, comprising:
i a cement premixer (3) for mixing a cement suspension, herein the cement premixer (3) comprises at least one ultrasonic generator, in particular an ultrasonic probe (6), for providing a cement suspension,
ii a concrete mixer (201) for producing a concrete mixture from the premixed cement suspension, in particular with the supply of aggregate (206 - 208), wherein the device (1) comprises a cement storage silo with a first partial feed line for supplying cement to the cement premixer (212), **characterized in that** the cement storage silo (10) is provided with a second partial feed line for supplying cement to the concrete mixer (201), and **that** the device (1) further comprises:
iii at least a first crystallization tank (4 or 5) which enables the crystallization of individual components contained in the cement prior to their addition to the concrete, in particular a crystallization tank assembly comprising the first crystallization tank (4 or 5), for increasing the early strengths of the concrete, wherein the first crystallization tank (4 or 5) comprises an agitator (8, 9).

7. Device according to claim 6, **characterized in that** the cement premixer (3), the crystallization tank (4 or 5), and the concrete mixer (201) are arranged relative to the Earth's gravitational field such that the cement suspension can flow by gravity from the cement premixer (3) into the crystallization tank (4 or 5) and from there into the concrete mixer (201).

8. Device according to any one of the preceding claims 6 or 7, **characterized in that** the device (1) comprises a second crystallization tank (5), preferably with a separate agitator (9), between the first crystallization tank (4) and the concrete mixer (201).

9. Device according to any one of the preceding claims 6 - 8, **characterized in that** the device (1) comprises an arrangement (17, 27) for detecting a measured variable, in particular for controlling an emergency emptying of the first and/or the second crystallization tank (4, 5).

10. Device according to any one of the preceding claims 6 - 9, **characterized in that** the device comprises an adding device, in particular a metering device, for supplying a flow agent, in particular depending on the detected measured variable.

11. Device according to any one of the preceding claims 6 - 10, **characterized in that** the first and/or the second crystallization tank (4, 5) is designed for a volume of at least 2 cubic meters, preferably 1.5 - 4 cubic meters, of a cement suspension.

12. Device according to any one of the preceding claims 6 - 11, **characterized in that** the first and/or the second crystallization tank (4, 5) comprises a heat exchanger assembly, in particular a double-walled segment, for temperature control of the cement suspension along the wall of the crystallization tank (4, 5).

13. Device according to any one of the preceding claims 6 - 12, **characterized in that** the device comprises a cement scale for metering a first portion of cement to the cement premixer (212) and for metering a second portion of cement to the concrete mixer (201).

14. Device according to any one of the preceding claims 6 - 13, **characterized in that** the device (1) comprises a sensor for determining the temperature of the cement suspension, or **that** the first and/or the second crystallization tank (4, 5) comprise a sensor element for determining the quality of the cement suspension disposed within the crystallization tank, in particular a temperature sensor, a torque sensor (viscosity), a conductivity sensor for determining thermal or electrical conductivity, a sensor for determining the ultrasonic propagation time, the ultrasonic velocity, and/or a density sensor.

15. Device according to claim 14, **characterized in that** the device (1) comprises a control and/or evaluation unit for controlling an actuator, in particular a temperature control device, an inlet valve, and/or an outlet valve based on the measured values determined by the sensor element.

## Revendications

1. Procédé de production d'un béton, comprenant :
i) la production d'une suspension de ciment dans un pré-mélangeur de ciment (212) à l'aide d'ultrasons ;
ii) l'agitation de la suspension de ciment dans une cuve de cristallisation (213) pendant une période de séjour prédéterminée, et
iii) le transfert de la suspension de ciment dans un malaxeur à béton (201) après une période de séjour prédéterminée.

2. Procédé selon la revendication 1, **caractérisé en ce que** le pré-mélangeur de ciment (212) est prévu pour mélanger une suspension de ciment et comporte, pour fournir une suspension de ciment, au moins un générateur d'ultrasons sous la forme d'une sonde à ultrasons (6) et une chambre de traitement, la au moins une sonde à ultrasons (6) faisant saillie au moins partiellement dans la chambre de traitement, et la sonde à ultrasons (6) émettant des ultrasons, les ultrasons émis présentant une intensité de 25 à 250 W/cm² et une amplitude de 15 à 500 µm.

3. Procédé selon l'une des revendications précédentes 1 ou 2, **caractérisé en ce que** le contrôle de la période de séjour s'effectue en fonction d'une durée prédéterminée à une température prédéterminée, et/ou **en ce que** le temps de séjour de la suspension s'effectue sur la base d'un dégagement de chaleur préalablement déterminé.

4. Procédé selon l'une des revendications précédentes, **caractérisé en ce que** la durée de pré-stockage de la suspension de ciment avant le transfert dans le malaxeur à béton (201) est comprise entre 1 et 8 heures.

5. Procédé selon l'une des revendications précédentes, **caractérisé en ce que** la proportion de ciment prétraité dans le béton est comprise entre 5 et 95 % en poids, idéalement entre 10 et 25 % en poids.

6. Dispositif (1) pour la production d'un béton selon un procédé selon l'une des revendications précédentes, comprenant :
i) un pré-mélangeur de ciment (3) pour mélanger une suspension de ciment, le prémélangeur de ciment (3) comportant, pour fournir une suspension de ciment, au moins un générateur d'ultrasons, en particulier une sonde à ultrasons (6) ;
ii un malaxeur à béton (201) pour produire un mélange de béton à partir de la suspension de ciment prémélangée, en particulier avec apport de granulats (206-208), le dispositif (1) comportant un silo de stockage de ciment avec une première conduite d'alimentation partielle en ciment vers le pré-mélangeur de ciment (-), **caractérisé en ce que** le silo de stockage de ciment (10) est pourvu d'une deuxième conduite d'alimentation partielle en ciment vers le malaxeur à béton (201), et **en ce que** le dispositif (1) comprend en outre :
iii au moins une première cuve de cristallisation (4 ou 5) qui permet une cristallisation de certains constituants contenus dans le ciment avant leur ajout au béton, en particulier un agencement de cuves de cristallisation comportant la première cuve de cristallisation (4 ou 5), pour augmenter les résistances initiales du béton ; la première cuve de cristallisation (4 ou 5) comportant un mécanisme d'agitation (8, 9).

7. Dispositif selon la revendication 6, **caractérisé en ce que** le prémélangeur de ciment (3), la cuve de cristallisation (4 ou 5) et le malaxeur à béton (201) sont disposés par rapport au champ de pesanteur terrestre de telle sorte que la suspension de ciment peut s'écouler par gravité du prémélangeur de ciment (3) dans la cuve de cristallisation (4 ou 5) et de là dans le malaxeur à béton (201).

8. Dispositif selon l'une des revendications précédentes 6 ou 7, **caractérisé en ce que** le dispositif (1) comporte, entre la première cuve de cristallisation (4) et le malaxeur à béton (201), une deuxième cuve de cristallisation (5), de préférence avec un mécanisme d'agitation séparé (9).

9. Dispositif selon l'une des revendications précédentes 6 à 8, **caractérisé en ce que** le dispositif (1) comporte un agencement (17, 27) pour acquérir une grandeur de mesure, en particulier pour commander une vidange d'urgence de la première et/ou de la deuxième cuve de cristallisation (4, 5).

10. Dispositif selon l'une des revendications précédentes 6 à 9, **caractérisé en ce que** le dispositif comporte un dispositif d'ajout, en particulier un dispositif de dosage, pour amener un superplastifiant, en particulier en fonction de la grandeur de mesure acquise.

11. Dispositif selon l'une des revendications précédentes 6 à 10, **caractérisé en ce que** la première et/ou la deuxième cuve de cristallisation (4, 5) est conçue pour une quantité d'au moins 2 mètres cubes, de préférence de 1,5 à 4 mètres cubes d'une suspension de ciment.

12. Dispositif selon l'une des revendications précédentes 6 à 11, **caractérisé en ce que** la première et/ou la deuxième cuve de cristallisation (4, 5) comporte un agencement d'échangeur thermique, en particulier un segment à double paroi, pour la régulation de la température de la suspension de ciment le long de la paroi de la cuve de cristallisation (4, 5).

13. Dispositif selon l'une des revendications précédentes 6 à 12, **caractérisé en ce que** le dispositif comporte une bascule à ciment pour doser une première quantité partielle de ciment vers le prémélangeur de ciment (212) et pour doser une deuxième quantité partielle de ciment vers le malaxeur à béton (201).

14. Dispositif selon l'une des revendications précédentes 6 à 13, **caractérisé en ce que** le dispositif (1) comporte un capteur pour déterminer la température de la suspension de ciment, ou **en ce que** la première et/ou la deuxième cuve de cristallisation (4, 5) comporte un élément capteur pour déterminer la qualité de la suspension de ciment se trouvant dans la cuve de cristallisation, en particulier un capteur de température, un capteur de couple (viscosité), un capteur de conductivité pour déterminer la conductivité thermique ou électrique, un capteur pour déterminer le temps de transit des ultrasons, la vitesse des ultrasons et/ou un capteur de densité.

15. Dispositif selon la revendication 14, **caractérisé en ce que** le dispositif (1) comporte une unité de commande et/ou d'évaluation pour commander un actionneur, en particulier un dispositif de régulation de la température, une vanne d'alimentation et/ou une vanne de vidange sur la base des valeurs de mesure déterminées par l'élément capteur.
